Europäisches Patentamt

European Patent Office

Office européen des brevets

(11) Publication number: **0 492 285 A1**

# EUROPEAN PATENT APPLICATION

(21) Application number: **91121270.2**

(22) Date of filing: **11.12.91**

(51) Int. Cl.5: **C04B 35/80**, C04B 35/64, C04B 35/58

(30) Priority: **12.12.90 IT 2236490**

(43) Date of publication of application:
**01.07.92 Bulletin 92/27**

(84) Designated Contracting States:
**AT BE CH DE DK ES FR GB GR IT LI LU NL SE**

(71) Applicant: **ISTITUTO GUIDO DONEGANI S.p.A.**
**4, Via Fauser**
**I-28100 Novara(IT)**

(72) Inventor: **Pezzoti, Giuseppe**
**Onohara Higashi 5-7, F403 FOLC, Kitasenri**
**Minoshi, Osaka 562(JP)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Sintered composite material based on silicon nitride.**

(57) Described is a sintered composite material with highly satisfactory mechanical characteristics which is suitable for applications at high temperatures and is composed of silicon nitride and silicon carbide, the latter being in the form of flat chips. This composite material is prepared by mixing, thoroughly and uniformly, 70 to 90% by volume of silicon nitride powder with 10 to 30% by volume of silicon carbide powder formed of chips whose average dimensions of the flat surface vary from 10 to 40 $\mu$m and a thickness from 1 to 10 $\mu$m. Placing the mixture thus obtained in a continuous mould, after a premoulding cycle, and finally hot isostatic pressing the premoulded body.

$$\dot{\varepsilon} = 1.5 \times 10^{-4} \, s^{-1}$$

○ $Si_3N_4$
● $Si_3N_4-SiC_w$
◆ $Si_3N_4-SiC_{pl}$

FIG. 3

The present invention relates to a sintered composite material based on high density silicon nitride, which is suitable for use as structural material in high temperature applications, owing to its high impact strength within a temperature range of from room temperature to extremely high temperatures, and also because of its invariably high mechanical resistance in extended operating cycles at temperatures up to 1100°C.

More specifically, the present invention relates to a sintered composite material for high-temperature applications based on silicon nitride and comprising, in amounts of from 10 to 30% by volume, silicon carbide in the form of chips geometrically shaped so as to display at least one pair of parallel surfaces.

Sintered bodies based on silicon nitride are still considered to be ceramic materials which are particularly suitable for high temperature applications. However, in spite of the numerous attempts to produce a sintered ceramic material based on silicon nitride which is suitable, e.g., for use in gas turbine engines, so far it has not been possible to find a material of this kind whose properties fully satisfy the conditions required for this type of application: profitable use of ceramic materials for parts of gas turbine engines requires an invariably high mechanical resistance (for example, a tensile strength of 300 MPa) at temperatures which exceed 1000°C for operating cycles as long as 10,000 hours., i.e., a high impact strength and breaking strength (cracking resistance) over a wide range of temperatures (from room temperature to extremely high temperatures).

So far it has been possible to obtain a few materials based on silicon nitride which show high impact strength and good mechanical resistance as well as some other materials having a relatively stable mechanical behaviour at high temperatures.

However, no material has yet been found whose properties satisfy both requirements at the same time, i.e. have a high impact strength together with a stable mechanical resistance when exposed to high temperatures for extended periods of time.

Generally, it can be said that the microstructural characteristics of materials based on silicon nitride which are required in the intergranular phase for obtaining high impact strength, have been found to be opposite to those required for obtaining the second of the above-mentioned properties. In other words, an intergranular phase which is weak enough to allow crack branching (which results in high impact strength) and, at the same time, shows a high resistance to phenomena which cause a degradation in mechanical resistance at high temperatures, such as formation of microcavities and reciprocal sliding of the chips, has not yet been found.

For example, by sintering an extremely pure silicon nitride powder, without additives, a high density sintered material may be obtained which retains its high mechanical resistance without any degradation up to 1400°C but which also is very fragile. These mechanical characteristics are due to the formation, during the sintering process, of a strong intergranular phase composed of pure silicon dioxide ($SiO_2$) and of elongated silicon nitride chips. Not even the addition of a reinforcement phase composed of silicon carbide whiskers in quantities of up to 30% by volume has proved to be sufficient for increasing the impact strength of the silicon nitride to values which are acceptable for an engine of ceramic material.

On the other hand, if sintering additives such as magnesium oxide, aluminium oxide or yttrium oxide are added to the silicon nitride powder, an intergranular phase may be obtained, after the sintering process, which is composed of a vitreous phase with a lower micromechanical resistance and distinctly elongated silicon nitride chips. The result thereof is that, with this kind of processing, a sintered material can be obtained which displays high impact strength but whose mechanical resistance above 1000°C undergoes considerable degradation due to softening in the intergranular vitreous phase.

In the composite material according to the present invention, all disadvantages involved in the use of sintered silicon nitride materials without sintering additives are eliminated, whereas the advantages are maintained. Accordingly, the present invention provides:

(1) a sintered material based on silicon nitride, having improved impact strength both at room temperature and at elevated temperatures and also retaining its satisfactory mechanical resistance to loads applied for extended periods of time at temperatures up to 1400°C, said sintered material being essentially composed of silicon nitride and silicon carbide in a volume ratio of from 90:10 to 70:30 and not containing any sintering additives;

(2) a process for the production of sintered bodies having the characteristics specified under (1). According to said process silicon carbide chips, essentially flat-shaped and with a high aspect ratio, are uniformly dispersed, with random orientation, in the silicon nitride matrix.

This kind of sintered composite material has a density which is 99.5% greater than the theoretical value and also maintains its tenacity under stress, up to 1400°C, both with respect to the rate at which the load is applied, established according to the standard value determined by the flexural test, and also if this rate is reduced to varying degrees.

With reference to the second aspect of the present invention, i.e., the process for the preparation of the above sintered composite material based on silicon nitride, the silicon nitride powder and the silicon carbide powder in the form of flat-shaped chips are thoroughly mixed as starting materials in volume ratios ranging from 90:10 to 70:30, without the addition of any sintering additive; the mixture is then placed in a mould with the application of a cold isostatic pressure cycle and the resulting premoulded composite material is sintered by applying a cycle of isostatic pressure under heat, preferably using the following standard parameters: maximum temperature of from about 1950 to about 2100°C, maximum pressure of from 150 to 200 MPa for a period at constant maximum temperature and maximum pressure ranging from 0.5 to 2 hours.

In accordance with the present invention the addition of typically flat-shaped chips of silicon carbide results in a sintered composite material based on silicon nitride which shows properties so far unknown with any other material. These properties are a considerably improved impact strength combined with an excellent mechanical resistance at high temperatures. The material of the present invention consequently is well-suited for use in structural parts of engines and offers numerous advantages for us in industrial applications.

The further detailed explanations which follow, provide an example of a preferred process for the preparation of the sintered composite material of the present invention.

In the present sintered composite materials the phase acting as matrix (continuous phase) is derived from silicon nitride powder with respect to which there are no specific limitations. However, as is explained in more detail below, this powder preferably comprises at least 95% of alpha-$Si_3N_4$ and has an average chip dimension of not more than 1 $\mu$m; in addition, it is preferable to have a homogeneous dispersion of the flat-shaped silicon carbide chips. In order to assure both satisfactory mechanical resistance and high impact strength, it is advisable to effect an as homogeneous as possible dispersion of the flat-shaped silicon carbide chips in the silicon nitride matrix. Therefore two conditions should preferably be met: a volume fraction of flat silicon carbide chips which does not exceed 30% of the total volume, and an average dimension of the chip, which refers to its flat surface, ranging from 10 to 40 $\mu$m. It is also preferred that the thickness of the flat-shaped silicon carbide chips is within the range of from 1 to 10 $\mu$m. With regard to the shape of the flat surface of the silicon carbide chips, there are no specific limitations: unless radical changes have been effected, they can be used in more or less the same state as they have been obtained in. When the volume fraction of the flat silicon carbide chips exceeds 30% of the total volume, it is difficult to obtain a complete, homogeneous dispersion thereof in the silicon nitride powder and the resulting presence of agglomerates adversely affects the tenacity of the sintered material.

On the other hand, however, if the volume fraction of the silicon carbide chips is lower than 10%, it is usually not possible to achieve an adequate reinforcement. Moreover, if the average dimension of the flat chips is too large, it is extremely difficult to prepare a homogeneous mixture thereof with the silicon nitride powder, whereas an average dimension which is too small does not afford high impact strength. A silicon carbide powder which satisfies all of the above conditions is available on the market. As described in the following practical example, extremely satisfactory results may be obtained by means of inglobement with a homogeneous dispersion and random orientation of 20% by volume of flat silicon carbide chips having an average surface dimension of 24 $\mu$m, in a matrix of silicon nitride.

In the production of sintered materials based on silicon nitride the problem of insufficient densification often arises, owing to the fact that the silicon nitride has low self-diffusion coefficients. This problem is particularly evident when sintering is carried out without additives and also when a substantial volume fraction of one or more reinforcement phases is added, which do not take part in the mass transport phenomena occurring during the sintering process. However, if the sintering is carried out by means of hot isostatic pressing (HIP), it is possible to obtain a high density sintered material (density close to its theoretical value) even when a reinforcement phase is added which is composed of up to 30% by volume of silicon carbide and when no other sintering additive is added. In accordance with specific requirements of the sintereing process, it consequently is not advisable to add silicon carbide flat chips in volume fractions which exceed 30% of the total volume as this makes it very difficult to obtain high density sintered materials.

The preferred sintering temperature ranges from 1950 to 2100°C. Too low a temperature causes incomplete sintering and, consequently, incomplete densification. On the other hand, if the sintering temperature is too high, the sintered material might show an insufficient density, due to the thermal decomposition of the silicon nitride, and damage may also be caused to the crystalline structure of the silicon carbide flat chips.

Impurities contained in the starting powders of silicon nitride and silicon carbide may have an extremely harmful effect on the mechanical resistance at high temperatures. In the articles by I. Tanaka et al. in J. Am. Chem. Soc. 72, page 1656 (1989) and by Pezzotti et al. (ibid., page 1461), it is clearly shown that even when silicon nitride powder is sintered without the addition of any additives, the mechanical resistance of the sintered material at high temperature undergoes considerable degradation due to the accumulation of impurites at the edges of the chips. Therefore, a strict control of the impurity content in the starting powders of silicon nitride and silicon carbide is essential. This will be further explained in the practical example below.

The obtainment of high impact strength and mechanical resistance of a sintered material without additives from silicon nitride powder reinforced with flat silicon carbide chips has given rise to an interesting phenomenon which so far has never been observed in the field of ceramic materials used for engineering purposes. As this phenomenon is closely related to the sintering process, the problem involved will be discussed first. When monolithic silicon nitride powder or a mixture of silicon nitride and silicon carbide powders are sintered by means of a HIP process without using sintering additives, a continuous layer of silicon oxide having a thickness of from 1 to 5 mm is formed at the edges of the chips. Silicon oxide is generally present as an impurity on the surface of the silicon carbide chips and forms a consituent part of the sintered silicon nitride material in a percentage of about 2.4% by weight of the total amount. Contrary to what has generally been accepted in the field of sintering silicon nitride powder with the use of additives, in the field of sintering silicon nitride powder without additives the presence of silicon oxide at the edges of the silicon carbide chips is considered to be extremely beneficial. In other words, the silicon oxide plays an important role both in the densification process and also with respect to the mechanical resistance at high temperatures. As far as the densification process is concerned, as silicon oxide turns into a liquid phase at temperatures higher than 1730°C, it stimulates the slippage and constriction process of the chips owing to a decrease in the porosity and, consequently, fosters the densification process. Furthermore, when the starting powders of silicon nitride are of an extremely high purity, the silicon oxide phase present at the edges of the chips in the sintered material of silicon nitride is also extremly pure: as a result, these materials are highly resistant both to the spreading of intergranular breakage cracks and also to creep buckling at temperatures up to 1400°C.

These properties are considered to be a direct consequence of the high resistance of the silicon oxide layer to cavitation and sliding phenomena which occur at high temperatures.

When there is a dispersion of flat silicon carbide chips in the silicon nitride matrix, during the cooling from the sintering temperature a state of residual stress occurs at the interface between the silicon nitride and the silicon carbide. This is due to the difference in the thermal expansion coefficients of said silicon nitride and said silicon carbide. More specifically, as the thermal expansion coefficient of silicon carbide is greater than that of silicon nitride, the intergranular phase of silicon oxide undergoes a state of residual stress. The larger the dimensions of the silicon carbide flat chips and the higher the sintering temperature, the greater will be this state of residual stress. As a result of this, when the silicon carbide flat chips are sufficiently large (for example of from 10 to 40 $\mu$m) and the sintering temperatures are high (for example above 2000°C), the silicon oxide phase at the interface between matrix and reinforcement is considerably weakened by the state of residual stress. As a result, only the interface bond carbide/nitride is weakened whereas the strong interface bond nitride/nitride remains unaltered. The simultaneous improvement of both the impact strength and the mechanical resistance at high temperatures obtained in the sintered composite material of the present invention is due to this microstructural characteristic. The fracture micromechanisms which contribute to the improvement of the breaking strength of the sintered material are micromechanisms which operate both at the end of the crack, such as local misalignment and instant stoppage of the breakage crack, and inside any tracks left behind by the corresponding breakage crack. They are all related to the above weakening caused by residual stress of the silicon nitride/carbide interface.

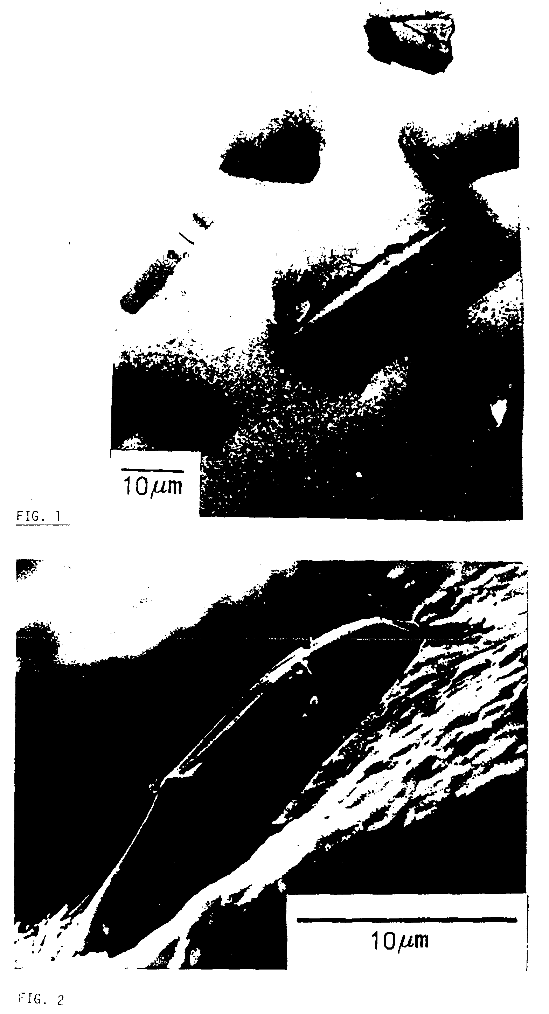

Figure 1 shows a scanning electron microscope photograph of the profile of the spreading of a breakage crack effected on a polished surface of the sintered composite material of the present invention by Vickers indentation. From this it can be seen that when a breakage crack has spread into the silicon nitride phase with a completely straight profile and approaches the flat interface between silicon carbide and silicon nitride, it is diverted along said interface in a new slanting direction and consequently stops.

An important role in increasing the impact strength of the present composite material is most probably also played by friction and bridging occuring within the tracks of the breakage crack. This is confirmed by the micrograph on a scanning electron microscope in Figure 2 which shows an unbroken silicon carbide flat chip protruding from the fractured surface.

This greater fracture resistance at high temperature of the sintered composite material of the present invention is mainly due to the strong bond obtained between the chips and the silicon nitride matrix. In addition, some of the mechanisms which contribute to the improvement of the impact strength observed under conditions of instant fracture at room temperature probably also play an important role in delaying the spreading of breakage cracks which occurs subcritically at high temperatures. All the above-mentioned advantages can be attributed to the reinforcement effect obtained by admixing silicon carbide flat chips of a predetermined size with the silicon nitride matrix.

EXAMPLE

An amount equal to 80% by volume of the total amount of highly pure silicon alpha-nitride powder having an average chip size of 0.2 $\mu$m was mixed with 20% by volume of silicon alpha-carbide powder with typically flat-shaped chips. The average dimension of the flat surface of the silicon alpha-carbide chips was about 24 $\mu$m whereas the average thickness, measured statistically by observation on a scanning electron microscope, ranged from 2.5 to 3 $\mu$m with consequent aspect ratio values in the range of 8 to 10.

The mixing of the starting powders was carried out by means of ball-milling using ethanol as solvent. When the ball-milling was completed, the mixture obtained was dried by eliminating the ethanol in a rotary evaporator. The mixture of dried powders was then premoulded by means of a cold isostatic pressing cycle and the resulting premould was enclosed in an evacuated pyrex glass capsule. The test sample thus assembled was sintered by means of a HIP cycle. The conditions of the HIP cycle included a maximum temperature of 2050°C and a maximum pressure of 190 MPa applied over a period of 1 hour.

The density of the sintered material thus obtained, in every test sample produced, proved to be 99.5% greater than that of the theoretical value.

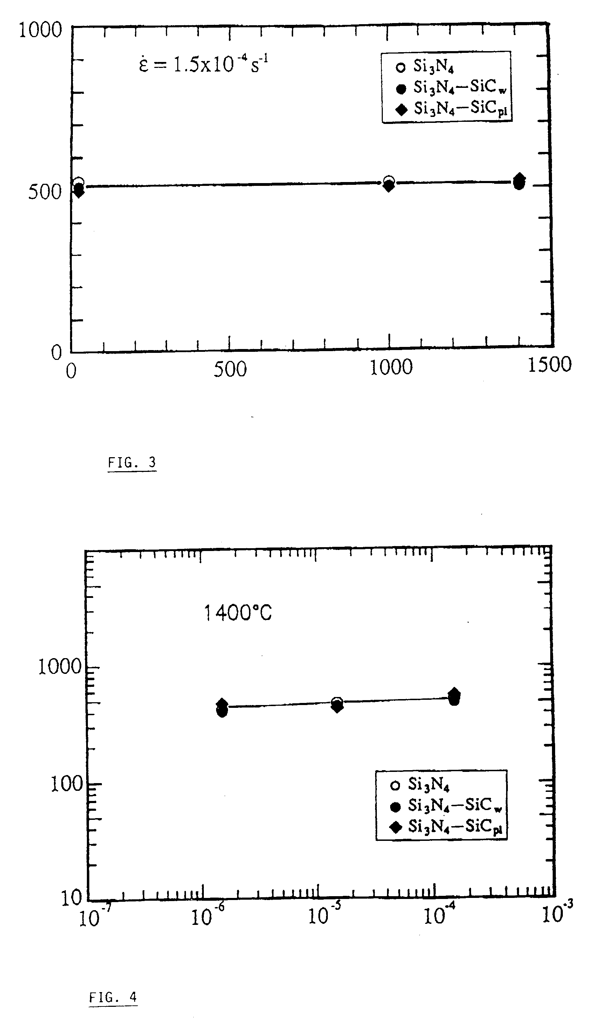

The impact strength of the sintered material was an isotropic property and its average value was 8.9 MPa x m$^{\frac{1}{2}}$. The flexural strength also was an isotropic property of the sintered material, and its average value at 1400°C was equal to 520 MPa (see Figure 3). Figure 3 shows a graph indicating the results of the four-point flexural strength test for the sintered composite material of the presnt invention as a function of the temperature up to 1400°C. For comparative purposes, there are also given the results obtained by using the same measuring procedure for a monolithic silicon nitride sintered material and for a sintered composite material based on silicon nitride in which the flat chips had been substituted with the same quantity of silicon carbide whiskers. The above materials were all obtained by the same process. Moreover, similar results of mechanical resistance were obtained, even when the deformation rate was reduced by two orders of magnitude with respect to the standard value for the flexural test (see Figure 4). Figure 4 shows the flexural strength of the above three kinds of sintered material, at a temperature of 1400°C as a function of the deformation rate.

In the graphs of Figure 3 and Figure 4 the open circle, closed circle and closed rhombus symbols represent data for monolithic silicon nitride, silicon nitride reinforced through the addition of 20% by volume of silicon carbide whiskers, and silicon nitride reinforced through the addition of 20% by volume of silicon nitride flat chips.

On examining the results shown in Figures 3 and 4, no particular difference between the three kinds of sintered material can be observed; the basic difference lies in their impact strength values. The sintered composite material of the present invention has an impact strength of 8.9 MPa x m$^{\frac{1}{2}}$ whereas the sintered material of monolithic silicon nitride and the sintered composite material of silicon nitride containing silicon carbide whiskers have an impact strength of 3.0 and 4.2 MPa x m$^{\frac{1}{2}}$ respectively. In other words, with the same mechanical resistance at high temperature, the composite material of the present invention has an impact strength which is more than 200% of that of the matrix.

As confirmed by the results of the tests described above, the mechanical properties of the sintered material were considerably improved in the composite material of the present invention. In other words, it maintains at the same time both a high impact strength and better mechanical resistance at an extremely small strain rate and up to a temperature of 1400°C. This constitutes a considerable progress in the field of ceramic materials for engineering purposes.

**Claims**

1. Sintered composite material for high temperature applications derived from a starting mixture of silicon nitride and 10 to 30% by volume of silicon carbide in the form of essentially flat-shaped chips.

2. Sintered composite material according to claim 1, in which the average dimensions of the flat surface of the chips range from about 10 to 40 $\mu$m.

3. Sintered composite material according to any one of claims 1 and 2, wherein the thickness of the flat-shaped chips ranges from 1 to 10 $\mu$m.

4. Process for the preparation of the sintered material as defined in any one of claims 1 to 3, comprising the thorough and uniform mixing of 70 to 90% by volume of silicon nitride powder with 10 to 30% by volume of silicon carbide powder in the form of essentially flat chips, the placing of the mixture thus obtained in a continuous mould and the sintering by hot isostatic pressing.

5. Process according to claim 4, in which the final sintering is carried out at a maximum temperature of from 1950 to 2100°C and a maximum pressure of from 150 to 200 MPa for from 0.5 to 2 hours.

6. Use of the sintered composite material according to any one of claims 1 to 3 for engineering purposes.

7. Use according to claim 6, wherein the sintered composite material is used in the production of engines, particularly gas turbine engines.

FIG. 1

FIG. 2

FIG. 3

FIG. 4

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BRITISH CERAMIC PROCEEDINGS. vol. 45, 1989, STOKE-ON-TRENT, GB pages 187 - 198; X.Y. ZHENG ET AL: 'Reinforcement of Silicon Nitride Ceramics with Whiskers and Platelets' * page 190, paragraph 2; figure 4; table 1 * * page 195, paragraph 2 - page 197, last paragraph; figures 8A-B,10-13 * | 1-4 | C04B35/80 C04B35/64 C04B35/58 |
| X | WO-A-8 904 735 (CERAMICS PROCESS SYSTEMS CORP) * claims 1,3,11-13 * | 1,6 | |
| P,X | EP-A-0 419 150 (NGK INSULATORS LTD ET AL) * the whole document * | 1-7 | |
| P,X | EP-A-0 419 151 (NGK INSULATORS LTD ET AL) * the whole document * | 1-7 | |
| P,X | JOURNAL OF THE EUROPEAN CERAMIC SOCIETY. vol. 8, no. 5, May 1991, BARKING, ESSEX, GB pages 305 - 309; M. POORTEMAN ET AL: 'Mechanical Properties of Silicon Nitride- Silicon Carbide Platelet Composites' * page 305, right column, paragraph 2 - page 308, left column, paragraph 2 * | 1-4,6-7 | |

TECHNICAL FIELDS SEARCHED (Int. Cl.5)

C04B

The present search report has been drawn up for all claims

| Place of search | Date of completion of the search | Examiner |
|---|---|---|
| BERLIN | 07 APRIL 1992 | KUEHNE H.C. |

EPO FORM 1503 03.82 (P0401)